# EUROPEAN PATENT APPLICATION

(11) **EP 2 262 229 A1**
(43) Date of publication of application: **15.12.2010**
(21) Application number: 09181026.7
(22) Date of filing: 30.12.2009
(51) Int. Cl.: H04N 5/44, G06F 3/01, G06F 3/033, G06F 3/048

(54) **Image display device and operation method thereof**

(30) Priority: 03.06.2009 KR 20090049191
(71) Applicant: LG Electronics Inc., Seoul 150-721 (KR)
(72) Inventor: Yi, Ji Hyeon, 137-724 Seoul (KR); Lee, Jae Kyung, 137-724 Seoul (KR); Lee, Kun Sik, 137-724 Seoul (KR); Kim, Gyu Seung, 137-724 Seoul (KR)
(74) Representative: Barr, Angela Loise

(57) **Abstract**

An image display device and an operation method thereof are provided that include receiving signals corresponding to spatial coordinates of the pointing device, recognizing at least one character based on the received signals, and displaying a channel list including at least one of a channel number or characters based on the at least one recognized character.

## Description

This application claims priority and benefit from Korean Application No. 10-2009-0049191, filed June 3, 2009, the subject matter of which is incorporated herein by reference.

### BACKGROUND

### 1. Field

Embodiments of the present invention may relate to an image display device and an operation method thereof. More particularly, embodiments of the present invention may relate to an image display device using a 3-Dimensional (3D) remote controller (or pointing device) for providing a user-desired broadcasting list, and an operation method thereof.

### 2. Background

An image display device is a device that displays a broadcast signal, a user input signal, a moving picture signal, a signal received from a Web server, etc. on a display. A broadcasting display device may display a user-selected broadcast program from among broadcast signals received from broadcasting stations. Broadcasting may be undergoing a transition from analog to digital all over the world.

Compared to analog broadcasting, digital broadcasting may boast of less data loss due to its robustness against external noise, effectiveness in error correction, high resolution, and/or clean and clear images, because audio and video signals are digitally transmitted. In addition, digital broadcasting may enable interactive services, unlike analog broadcasting.

A remote control device separated from an image display device (for example, a remote controller) may be used to operate the image display device. Owing to diverse operations of the image display device, many functions may be required for the remote control device.

### BRIEF DESCRIPTION OF THE DRAWINGS

Arrangements and embodiments may be described in detail with reference to the following drawings in which like reference numerals refer to like elements and wherein:

FIG. 1 is a block diagram of an image display device according to an exemplary embodiment of the present invention;

FIGs. 2A and 2B are frontal perspective views of the image display device and a 3-Dimensional (3D) remote controller according to an exemplary embodiment of the present invention;

FIG. 3 is a block diagram of a 3D remote controller according to an exemplary embodiment of the present invention;

FIG. 4 is a flowchart illustrating a method of operating an image display device according to an exemplary embodiment of the present invention;

FIG. 5 is a flowchart illustrating a method of operating an image display device according to an exemplary embodiment of the present invention;

FIGs. 6A to 8B illustrate screens having images displayed on a display according to an exemplary embodiment of the present invention; and

FIGs. 9A to 11B illustrate screens having images displayed on a display according to an exemplary embodiment of the present invention.

### DETAILED DESCRIPTION

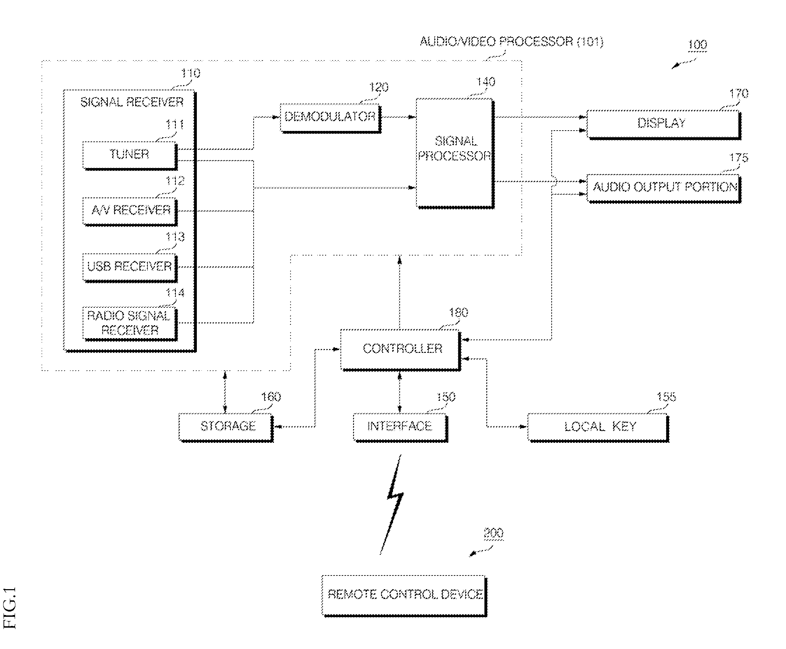

FIG. 1 is a block diagram of an image display device according to an exemplary embodiment of the present invention. Other embodiments and configurations may also be within the scope of the present invention.

As shown in FIG. 1, an image display device 100 may include an audio/video processor 101, an interface 150, a local key 155, a storage 160 (or memory), a display 170, an audio output portion 175 and a controller 180.

The audio/video processor 101 may process a received audio or video signal so as to output audio or video to the audio output portion 175 or the display 170. The audio/video processor 101 may include a signal receiver 110, a demodulator 120 and a signal processor 140. The signal receiver 110 may include a tuner 111, an Audio/Visual (A/V) receiver 112, a Universal Serial Bus (USB) receiver 113 and a radio signal receiver 114.

The tuner 111 may select an RF broadcast signal of a user-selected channel from among a plurality of RF broadcast signals received through an antenna and downconvert the selected RF broadcast signal to an Intermediate Frequency (IF) signal or a baseband audio or video signal. For example, if the selected RF broadcast signal is a digital broadcast signal, the tuner 111 may downconvert the RF broadcast signal to a Digital IF (DIF) signal. If the selected RF broadcast signal is an analog broadcast signal, the tuner 111 may downconvert the RF broadcast signal to an analog baseband video or audio signal (Composite Video Banking Sync (CVBS)/Sound Intermediate Frequency (SIF)). That is, the tuner 111 may process a digital or analog broadcast signal. The analog baseband video or audio signal (CVBS/SIF) may be provided directly to the signal processor 140.

The tuner 111 may receive a single-carrier RF broadcast signal based on Advanced Television System Committee (ATSC) or a multi-carrier RF broadcast signal based on Digital Video Broadcasting (DVB).

The image display device 100 may include at least two tuners. Like a first tuner, a second tuner may select an RF broadcast signal of a user-selected channel from among RF broadcast signals received through the antenna and downconvert the selected RF broadcast signal to an IF signal or a baseband video or audio signal.

The second tuner may sequentially select RF signals of all broadcast channels that have been stored by a channel memory function from among received RF broadcast signals and downconvert the selected RF signals to IF signals or baseband video or audio signals. The second tuner may perform the downconversion of the RF signals of all broadcast channels periodically. The image display device 100 may provide video signals of a plurality of channels downconverted by the second tuner in thumbnails, while displaying the video of a broadcast signal downconverted by the first tuner. The first tuner may downconvert a user-selected main RF broadcast signal to an IF signal or a baseband video or audio signal, and the second tuner may select all RF broadcast signals except for the main RF broadcast signal sequentially/periodically and downconvert the selected RF broadcast signals to IF signals or baseband video or audio signals.

The demodulator 120 may demodulate the DIF signal received from the tuner 111. For example, if the DIF signal is an ATSC signal, the demodulator 120 may demodulate the DIF signal by 8-Vestigal Side Band (8-VSB). In another example, if the DIF signal is a DVB signal, the demodulator 120 demodulates the DIF signal by Coded Orthogonal Frequency Division Multiple Access (COFDMA) demodulation.

The demodulator 120 may further perform channel decoding. For the channel decoding, the demodulator 120 may include a Trellis decoder, a deinterleaver and a Reed Solomon decoder for Trellis decoding, deinterleaving and Reed Solomon decoding, respectively.

After the demodulation and channel decoding, the demodulator 120 may output a Transport Stream (TS) signal. A video signal, an audio signal or a data signal may be multiplexed in the TS signal. For example, the TS signal may be a Moving Picture Experts Crroup-2 (MPEG-2) TS having an MPEG-2 video signal and a Dolby AC-3 audio signal multiplexed. More specifically, the MPEG-2 TS may include a 4-byte header and a 184-byte payload.

The TS signal may be provided to the signal processor 140. The signal processor 140 may demultiplex and process the TS signal and output a video signal to the display 170 and an audio signal to the audio output portion 175.

An image display device having at least two tuners may have a similar number of demodulators. Additionally, a demodulator may be separately provided for each of ATSC and DVB.

The signal receiver 110 may connect the image display device 100 to an external device. The external device may be an audio or video output device such as a DVD player, a radio, an audio player, an MP3 player, a camera, a camcorder, a game player, etc. The signal receiver 110 may provide an audio, video or data signal received from the external device to the signal processor 140 for processing the video and audio signals in the image display device 100.

In the signal receiver 110, the A/V receiver 112 may include a CVBS port, a component port, a S-video port (analog), a Digital Visual Interface (DVI) port, a High Definition Multimedia Interface (HDMI) port, a Red, Green, Blue (RGB) port, a D-SUB port, an Institute of Electrical and Electronics Engineers (IEEE) 1394 port, an Sony/Phillips Digital InterFace (SPDIF) port, a Liquid HD port, etc. in order to provide audio and video signals received from the external device to the image display device 100. Analog signals received through the CVBS port and the S-video port may be provided to the signal processor 140 after analog-to-digital conversion. Digital signals received through the other input ports may be provided to the signal processor 140 without analog-to-digital conversion.

The USB receiver 113 may receive audio and video signals through the USB port.

The radio signal receiver 114 may connect the image display device 100 to a wireless network. The image display device 100 may access a wireless Internet through the radio signal receiver 114. For connection to the wireless Internet, a communication standard may be used, such as Wireless Local Area Network (WLAN) (Wi-Fi), Wireless Broadband (WiBro), Worldwide Interoperability for Microwave Access (Wimax), High Speed Downlink Packet Access (HSDPA), etc. Further, the radio signal receiver 114 may conduct short-range communications with another electronic device. For example, the RF receiver 114 may be networked to another electronic device by a communication standard like Bluetooth, Radio Frequency Identification (RFID), InfraRed Data Association (IrDA), Ultra Wideband (UWB), ZigBee, etc.

The signal receiver 110 may connect the image display device 100 to a set-top box (or similar device). For example, if the set-top box operates for Internet Protocol (IP) TV, the signal receiver 110 may transmit an audio, video or data signal received from the IPTV set-top box to the signal processor 140 and a processed signal received from the signal processor 140 to the IP TV set-top box.

The signal processor 140 may demultiplex a received TS signal (e.g. an MPEG-2 TS) into an audio signal, a video signal and a data signal. The signal processor 140 may also process the demultiplexed video signal. For example, if the demultiplexed video signal was coded, the signal processor 140 may decode the video signal. More specifically, if the demultiplexed video signal is an MPEG-2 coded video signal, an MPEG-2 decoder may decode the video signal. If the demultiplexed video signal was coded in compliance with H.264 for Digital Multimedia Broadcasting (DMB) or Digital Video Broadcasting-Handheld (DVB-H), an H.264 decoder may decode the video signal.

The signal processor 140 may control brightness, tint, and/or color for the video signal. The video signal processed by the signal processor 140 may be displayed on the display 170.

The signal processor 140 may also process the demultiplexed audio signal. For example, if the demultiplexed audio signal was coded, the signal processor 140 may decode the audio signal. More specifically, if the demultiplexed audio signal is an MPEG-2 coded audio signal, an MPEG-2 decoder may decode the audio signal. If the demultiplexed audio signal was coded in compliance with MPEG 4 Bit Sliced Arithmetic Coding (BSAC) for terrestrial DMB, an MPEG 4 decoder may decode the audio signal. If the demultiplexed audio signal was coded in compliance with MPEG 2 Advanced Audio Codec (AAC) for satellite DMB or DVB-H, an AAC decoder may decode the audio signal.

The signal processor 140 may control base, treble and/or volume for the audio signal. The audio signal processed by the signal processor 140 may be provided to the audio output portion 175.

The signal processor 140 may also process the demultiplexed data signal. For example, if the demultiplexed data signal was coded, the signal processor 140 may decode the data signal. The coded data signal may be Electronic Program Guide (EPG) information including broadcasting information such as starts, ends, etc. of broadcast programs of each channel. For example, the EPG information may be ATSC-Program and System Information Protocol (ATSC-PSIP) information in case of ATSC. For DVB, the EPG information may include DVB-Service Information (DVB-SI). The ATSC-PSIP information or DVB-SI may be included in the 4-byte header of the above-described TS (i.e., MPEG-2 TS).

The signal processor 140 may display information graphically or in text on the display 170 based on at least one of the processed video and data signals and a user input signal received through a remote control device 200. The remote control device 200 may also be referred to as a pointing device. As one example, the remote control device 200 may be a mobile communication terminal or a subscriber unit.

The signal processor 140 may be incorporated into the controller 180 as a single module.

The storage 160 (or memory) may store programs for signal processing and control operations of the controller 180 and store processed video, audio and/or data signals. The storage 160 may temporarily store video, audio and/or data signals received at the signal receiver 110.

The storage 160 may include a storage medium of at least one type of flash memory, hard disk, multimedia card micro type, card-type memory (e.g. Secure Digital (SD) or eXtreme Digital (XD) memory), Random Access Memory (RAM), and Read Only Memory (ROM) (e.g. Electrically Erasable Programmable ROM (EEPROM)). The image display device 100 may reproduce a file stored in the storage 160 (e.g. a moving picture file, a still image file, a music file, a text file, etc.) and provide the reproduced file to the user.

The controller 180 may provide overall control to the image display device 100. The controller 180 may receive a signal from the remote control device 200 via the interface 150. The controller 180 may identify a command input to the remote control device 200 by the received signal and control the image display device 100 based on the command. For example, upon receipt of a predetermined channel selection command from the user, the controller 180 may control the tuner 111 to provide a selected channel through the signal receiver 110. The controller 180 may control the signal processor 140 to process the audio and video signals of the selected channel. The controller 180 may control the signal processor 140 to output user-selected channel information along with the processed audio and video signals to the display 170 and/or the audio output portion 175.

In another example, the user may input a different-type video and/or audio output command through the remote control device 200. The user may want to view a video signal of a camera or a camcorder received through the USB receiver 113 rather than a broadcast signal. The controller 180 may control the audio/video processor 101 such that an audio or video signal received through the USB receiver 113 of the signal receiver 110 may be processed by the signal processor 140 and output to the display 170 and/or the audio output portion 175.

Besides a command received through the remote control device 200, the controller 180 may identify a user command received through the user input portion 155 provided to the image display device 100 and control the image display device 100 based on the user command. For example, the user may input an on/off command, a channel switch command, a volume change command, and/or the like for the image display device 100 through the user input portion 155. The user input portion 155 may include buttons and/or keys formed in the image display device 100. The controller 180 may determine whether the user input portion 155 has been manipulated and control the image display device 100 based on the determination.

The controller 180 may incorporate the signal processor 140 as a single module.

The display 170 may display a broadcast image or an object based on a signal received from the controller 180.

The objects may include a variety of menus or widgets displayed on the display 170 for inputting commands to the image display device 100 or for representing information related to the image display device 100.

The objects may refer to images or text indicating information about the image display device 100 or information about an image displayed on the image display device 100, such as an audio output level, channel information, a current time, etc. regarding the image display device 100. The objects may be configured in different forms (e.g. moving pictures) based on the types of displayable information or to be displayed on the image display device 100. The objects do not limit the scope of embodiments.

As one exemplary embodiment, a widget may be a Graphic User Interface (GUI) component that enables a user to directly change particular data.

The object may be one of a volume control button, a channel selection button, a menu, an icon, a navigation tab, a scroll bar, a progress bar, a text box, a window, and/or etc. displayed on the display 170 of the image display device 100. The type of an object configured in the image display device 100 may depend on a specification of a GUI that can or should be implemented in the image display device 100, although the scope of embodiments are not limited thereto.

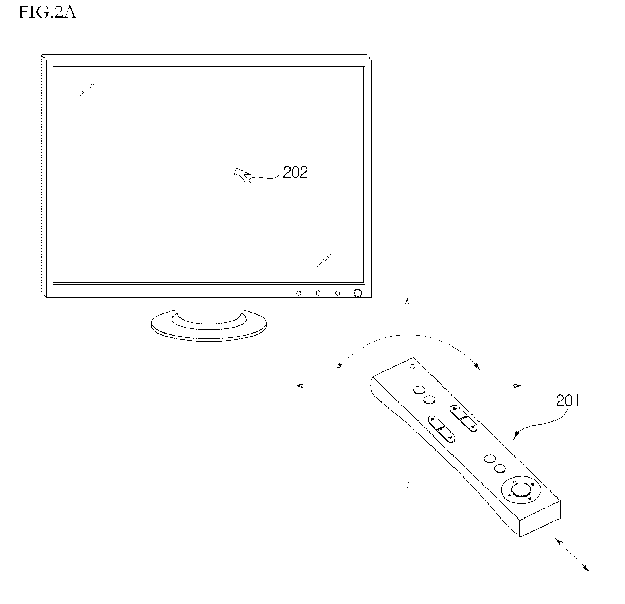

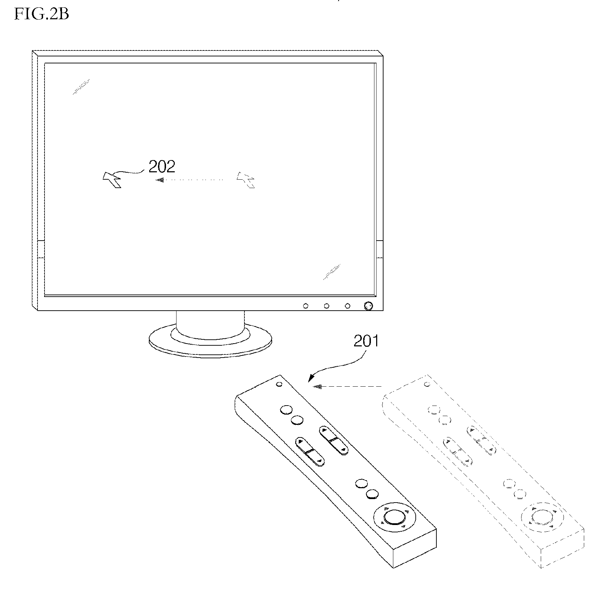

FIGs. 2A and 2B are frontal perspective views of the image display device 100 and a 3D remote controller 201 for inputting a command to the image display device 100 according to an exemplary embodiment of the present invention. Other embodiments and configurations may also be within the scope of the present invention.

The 3D remote controller 201 may be a kind of the remote control device 200 for inputting a command to the image display device 100. The remote controller 201 may also be referred to as a pointing device. As one example, the remote controller 201 may be a mobile communication terminal. The 3D remote controller 201 may transmit and receive signals to and from the image display device 100 in compliance with an RF communication standard. As shown in FIG. 2A, a pointer 202 corresponding to the 3D remote controller 201 may be displayed on the image display device 100.

The user may move the 3D remote controller 201 up, down, left, right, forward or backward, and/or rotate the remote controller 201. The pointer 202 may move on the image display device 100 in correspondence with movement and/or rotation of the 3D remote controller 201.

FIG. 2B illustrates movement of the pointer 202 on the image display device 100 based on movement of the remote controller 201. As shown in FIG. 2B, when the user moves the 3D remote controller 201 to the left, the pointer 202 may also move to the left on the image display device 100. The 3D remote controller 201 may include a sensor for sensing movement of the remote controller 201. Information about movement of the 3D remote controller 201 as sensed by the sensor may be provided to the image display device 100. The image display device 100 may determine the movement of the remote controller 201 based on the received information and calculate coordinates of the pointer 202 based on the movement of the remote controller 201.

In FIGs. 2A and 2B, the pointer 202 may move on the image display device 100 in correspondence with an upward, downward, left or right movement and/or rotation of the 3D remote controller 201. The velocity and/or direction of the pointer 202 may correspond to that of the remote controller 201. The pointer 202 may move on the image display device 100 in correspondence with movement of the remote controller 201. A movement of the remote controller 201 may trigger entry of a predetermined command to the image display device 100. If the 3D remote controller 201 may move forward or backward, an image displayed on the image display device 200 may be enlarged and/or contracted (i.e., reduced).

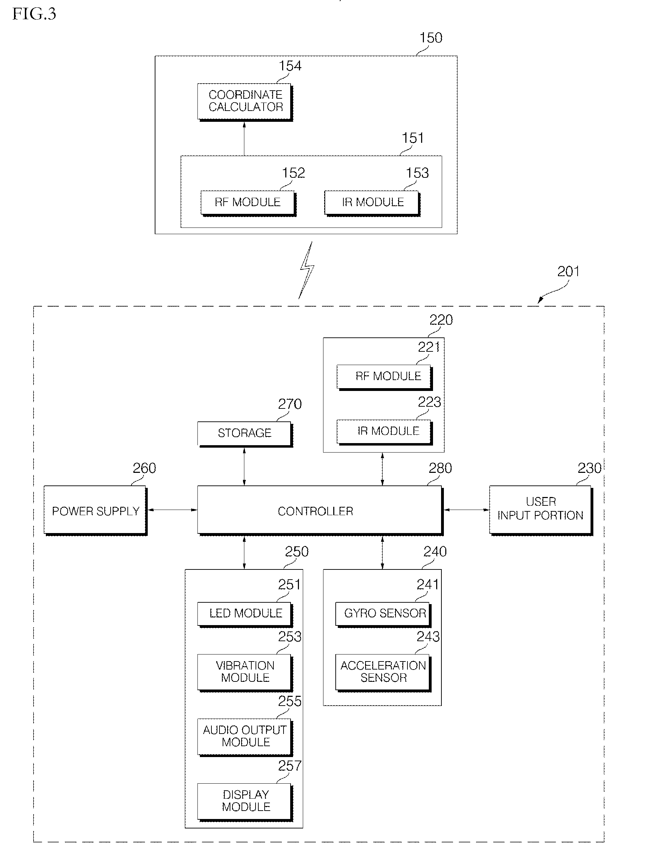

FIG. 3 is a block diagram of the 3D remote controller 201 and the user interface 150 of the image display device 100 according to an exemplary embodiment of the present invention. Other embodiments and configurations may also be within the scope of the present invention.

As shown in FIG. 3, the 3D remote controller 201 may include a radio transceiver 220, a user input portion 230, a sensor portion 240, an output portion 250, a power supply 260, a storage 270 (or memory) and a controller 280.

The radio transceiver 220 may transmit and receive signals to and from the image display device 100. The 3D remote controller 201 may be provided with a radio frequency (RF) module 221 for transmitting and receiving signals to and from the interface 150 of the image display device 100 based on an RF communication standard. The 3D remote controller 201 may include an infrared (IR) module 223 for transmitting and receiving signals to and from the interface 150 of the image display device 100 based on an IR communication standard. Accordingly, the remote controller 201 (or pointing device) may include a first wireless communication module (i.e., the RF module 221) and a second wireless communication module (i.e., the IR module 223).

The 3D remote controller 201 may transmit a signal carrying information about an operation of the 3D remote controller 201 to the image display device 100 through the RF module 221. The 3D remote controller 201 may receive a signal from the image display device 100 through the RF module 221. The 3D remote controller 201 may transmit commands associated with power on/off, channel switching, volume change, etc. to the image display device 100 through the IF module 223.

In one embodiment, the RF module 221 may be used to turn power of the image display device (such as a television) either on or off. In another embodiment, the IR module 223 may be used to turn power of the image display device either on or off. In another embodiment, all wireless communication between the remote controller 201 and the image display device 100 may be performed using the IR module 223.

The user input portion 230 may be configured with a keypad and/or buttons. The user may input a command related to the image display device 100 to the 3D remote controller 201 by manipulating the user input portion 230. If the user input portion 230 includes hard key buttons, the user may input commands related to the image display device 100 to the 3D remote controller 201 by pushing the hard key buttons. If the user input portion 230 is provided with a touch screen, the user may input commands related to the image display device 100 to the 3D remote controller 201 by touching soft keys on the touch screen. The user input portion 230 may have a variety of input means the user can manipulate, such as a scroll key, a zog key, etc.

The sensor portion 240 may include a gyro sensor 241 and/or an acceleration sensor 243. The gyro sensor 241 may sense information about an operation of the 3D remote controller 201. For example, the gyro sensor 241 may sense information about an operation of the 3D remote controller 201 along x, y and z axes. The acceleration sensor 243 may sense information about velocity of the 3D remote controller 201.

The output portion 250 may output a video or audio signal corresponding to a manipulation of the user input portion 230 or a signal transmitted by the image display device 100. The user may be aware from the output portion 250 whether the user input portion 230 has been manipulated or the image display device 100 has been controlled.

For example, the output portion 250 may include a Light Emitting Diode (LED) module 251 for illuminating when the user input portion 230 has been manipulated or a signal is transmitted to or is received from the image display device 100 through the radio signal transceiver 220, a vibration module 253 for generating vibrations, an audio output module 255 for outputting audio and/or a display module 257 for outputting video.

The power supply 260 may supply power to the 3D remote controller 201. When the 3D remote controller 201 is kept stationary for a predetermined time period, the power supply 260 may block power (or reduce power) for the 3D remote controller 201. When a predetermined key of the 3D remote controller 201 is manipulated, the power supply 260 may resume power supply.

The storage 270 (or memory) may store a plurality of types of programs required for control or operation of the 3D remote controller 201, and/or application data. When the 3D remote controller 201 wirelessly transmits and receives signals to and from the image display device 100 through the RF module 221, the signal transmission and reception may be carried out in a predetermined frequency band. The controller 280 of the 3D remote controller 201 may store information about the frequency band in which to wirelessly transmit and receive signals to and from the image display device 100 paired with the 3D remote controller 201 and refer to the information.

The controller 280 may provide overall control of the 3D remote controller 201. The controller 280 may transmit a signal corresponding to a predetermined key manipulation on the user input portion 230 or a signal corresponding to an operation of the 3D remote controller 201 sensed by the sensor portion 240 to the interface 150 of the image display device 100 through the radio transceiver 220.

The interface 150 of the image display device 100 may have an radio transceiver 151 for wirelessly transmitting and receiving signals to and from the 3D remote controller 201, and a coordinate calculator 154 for calculating the coordinates of the pointer corresponding to an operation of the 3D remote controller 201. The coordinate calculator 154 may receive signals corresponding to spatial coordinates of the remote controller 201.

The interface 150 may wirelessly transmit and receive signals to and from the 3D remote controller 201 through the RF module 152. The interface 150 may also receive a signal based on an IR communication standard from the 3D remote controller 201 through the IR module 153.

The coordinate calculator 154 may calculate the coordinates (x, y, z) of the pointer 202 to be displayed on the display 170 by correcting handshaking or errors from a signal corresponding to an operation of the 3D remote controller 201 received through the radio transceiver 151.

Signals received from the 3D remote controller 201 through the interface 150 may be provided to the controller 180 of the image display device 100. The received signals may correspond to spatial coordinates of the remote controller 201. The controller 180 may identify information about an operation of the 3D remote controller 201 or a key manipulation on the 3D remote controller 201 from the received signals and control the image display device 100 based on the information.

In another example, the 3D remote controller 201 may calculate spatial coordinates corresponding to its operation and output the spatial coordinates to the interface 150 of the image display device 100. The interface 150 of the image display device 100 may then transmit information about the received spatial coordinates to the controller 180 without correcting handshaking or errors.

FIGs. 1, 2 and 3 illustrate the image display device 100 and the 3D remote controller 201 (as the remote control device 200) according to an exemplary embodiment of the present invention. Components of the image display device 100 and the 3D remote controller 201 may be integrated or omitted, and/or other components may be added. That is, two or more components may be incorporated into a single component or one component may be configured to be divided into two or more separate components. Also, the function of each block is presented for illustrative purposes, and does not limit the scope of the present invention.

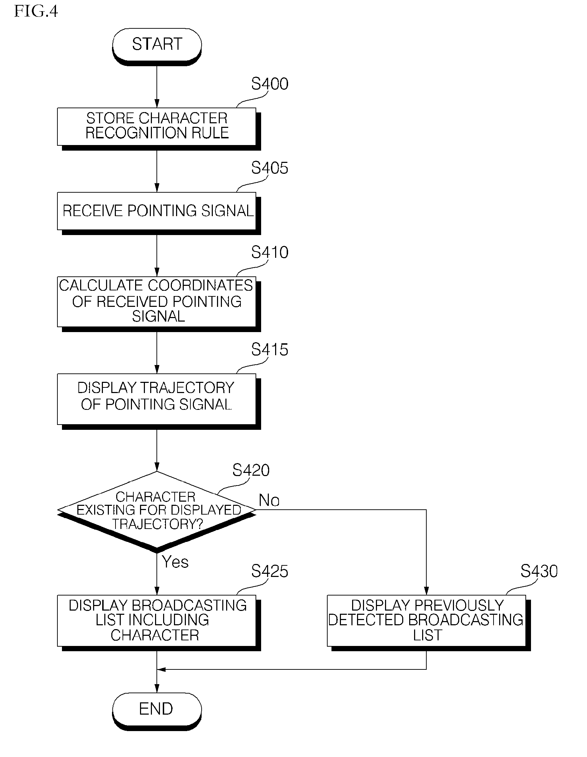

FIG. 4 is a flowchart illustrating a method of operating an image display device according to an exemplary embodiment of the present invention. Other operations, orders of operation and embodiments may also be within the scope of the present invention.

As shown in FIG. 4, the controller 180 may store a character recognition rule in the storage 160 in operation S400. The character recognition rule may be stored in the controller 180. When the character recognition rule is set, the controller 180 may identify a character represented by a trajectory of a signal received from the 3D remote controller 201. The character recognition rule may be a Korean character recognition rule, an English character recognition rule, a Chinese character recognition rule, a Japanese character recognition rule, a digit recognition rule and/or the like.

In operation S405, a directional pointing signal may be received from the 3D remote controller 201. The pointing signal may include values output from the gyro sensor 241 and/or the acceleration sensor 243 of the 3D remote controller 201. If the 3D remote controller 201 is in an active state, the remote controller 201 may continue to transmit pointing signals. The 3D remote controller 201 may transmit the pointing signal together with a selection signal. Upon receipt of a user command from the user input portion 230, the 3D remote controller 201 may transmit the selection signal to the radio transceiver 151 of the image display device 100.

In operation S410, the coordinate calculator 154 may calculate coordinates from the received pointing signal. The controller 180 may display the trajectory of the pointing signal at the calculated coordinates on the display 170 in operation S415. The pointer may be displayed at the calculated coordinates.

In operation S420, the controller 180 may determine whether there is a character corresponding to the trajectory displayed in operation S415 according to the character recognition rule stored in operation S400.

In operation S420, the controller 180 may determine whether there is a character corresponding to the displayed trajectory according to the stored character recognition rule.

If receiving a first pointing signal and a second pointing signal that follows the first pointing signal discontinuously within a predetermined time, the controller 180 may combine trajectories of the first pointing signal and the second pointing signal and determine whether there are characters corresponding to the combined trajectory. The predetermined time may be a time interval between pointing signals when the pointing signals in combination form one character or word.

In the presence of the character corresponding to the displayed trajectory in operation S420, the controller 180 may display a broadcasting list (or channel list) including the character in operation S425. States differently, the controller 180 may recognize at least one character based on the received signals and display the broadcasting list (or channel list). The broadcasting list (or channel list) may include channel numbers including the recognized character or broadcast program titles including the recognized character. The broadcasting list may be stored separately. When a broadcasting is selected from the broadcasting list based on a selection signal received from the 3D remote controller 201, a broadcast image of the selected broadcasting may be displayed on the display 170.

If the displayed character fully matches a channel number or a broadcast program title, the control channel 180 may switch to a channel with the channel name or a broadcast program with the broadcast program title and display broadcast images of the switched channel or broadcast program on the display 170. For example, the displayed character may be identical to a channel number or a broadcast program title.

When a broadcasting is selected from the broadcasting list, the controller 180 may display a broadcast image of the selected broadcasting on the display 170.

Use of various character recognition rules may facilitate reading of the broadcasting list even if a broadcast program is titled in a foreign language.

On the other hand, in an absence of a character corresponding to the displayed trajectory in operation S420, the controller 180 may display a previously searched broadcasting list or channel list on the display 170 in operation S430.

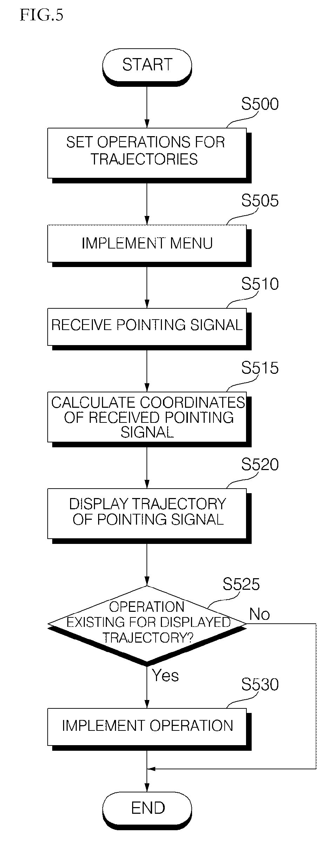

FIG. 5 is a flowchart illustrating a method of operating an image display device according to an exemplary embodiment of the present invention. Other operations, orders of operation and embodiments may also be within the scope of the present invention.

As shown in FIG. 5, in operation S500 the controller 180 may set operations corresponding to trajectories of pointing signals received based on user commands.

The operations may include any operation that may be performed in the image display device 100, such as a broadcasting information display, a channel list display, a game implementation, a mute implementation, an on-going menu switching, picture switching in a slide show, and play, stop, rewind, and/or forward of moving pictures, etc.

For example, if the trajectory of a received pointing signal represents 'H', the controller 180 may set an audio volume to be turned up. If the trajectory of the pointing signal represents '->', the controller 180 may set a channel to be switched. If the trajectory of the pointing signal represents 'O' the controller 180 may set a mute operation to be performed. The operations may be set by a manufacturer and/or the user. Therefore, the trajectories of pointing signals may take various forms based on user commands, and are not limited to characters.

An operation corresponding to the trajectory of the pointing signal may vary with an on-going menu. For example, if the on-going menu is a music play menu, the trajectory 'H' may lead to audio volume-up. If the on-going menu is a broadcasting display menu, the trajectory 'H' may lead to channel switching.

The controller 180 then may implement a menu according to a user command in operation S505. While the menu is running, a directional pointing signal may be received from the 3D remote controller 201 in operation S510.

The coordinate calculator 154 may calculate coordinates from the received pointing signal(s) in operation S515. The controller 180 may display the trajectory of the pointing signal at the calculated coordinates on the display 170 in operation S520. The pointer may be displayed at the calculated coordinates.

In operation S525, the controller 180 may determine whether there is an operation corresponding to the trajectory displayed in the menu implemented in operation S505. For example, if the trajectory 'H' is recognized during running a moving picture play menu, the controller 180 may determine whether there is an operation corresponding to the trajectory 'H' in the moving picture play menu.

In the presence of an operation corresponding to the trajectory in operation S525, the controller 180 may perform the operation that was set for the displayed trajectory in operation S530.

The controller 180 may recognize the displayed trajectory as a character according to a pre-stored character recognition rule. If the displayed trajectory represents a character, the controller 180 may execute a menu or a file having the character as its name, For example, if the trajectory of the received pointing signal is recognized as a character 'A', a music file titled 'A' may be played.

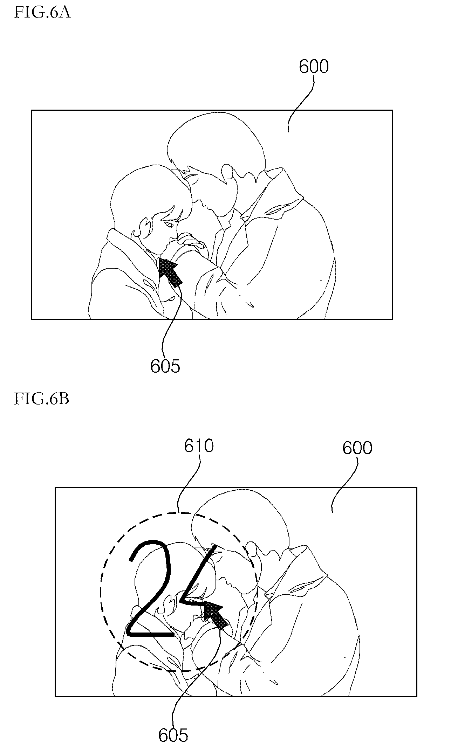

FIGs. 6A to 8B illustrate screens having images displayed on a display according to an exemplary embodiment.

As shown in FIG. 6A, a broadcast image 600 and a pointer 605 corresponding to a pointing signal received from the 3D remote controller 201 may be displayed on the display 170 of the image display device 100. In case of a directional pointing signal, a first trajectory 610 of the pointing signal may be displayed over the broadcast image 600 at coordinates calculated from the received pointing signal, as shown in FIG. 6B. The pointer 605 corresponding to the pointing signal may be displayed along with the trajectory 610. If the trajectory 610 draws '2' and '4' discontinuously and '4' follows '2' within a predetermined time, the controller 180 may recognize the trajectory 610 as '24'.

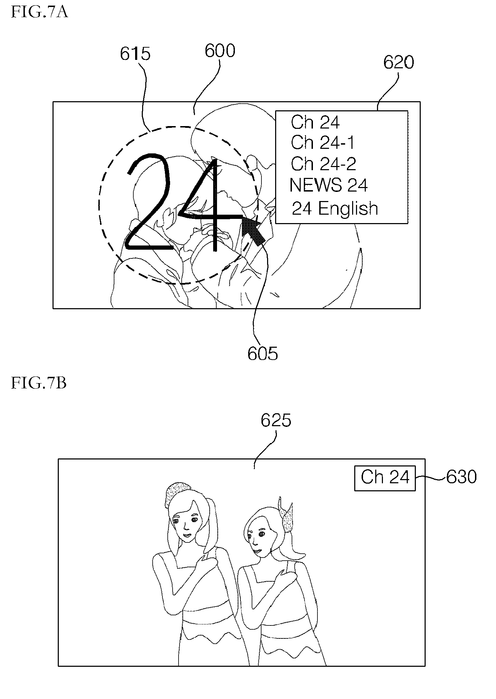

If the trajectory 610 is recognized as '24' using a digit/character recognition rule, broadcasting names having '24' may be displayed in a broadcasting list 620 (or channel list) in FIG. 7A. That is, channel numbers with '24' or broadcast program titles with '24' may be listed in the broadcasting list 620.

When the first trajectory 610 is recognized as '24' according to the character recognition rule, a channel with the number '24' may be switched to and a broadcast image 625 of channel 24 may be displayed in FIG. 7B. The broadcast image 625 may be displayed along with a channel number 630, Ch24.

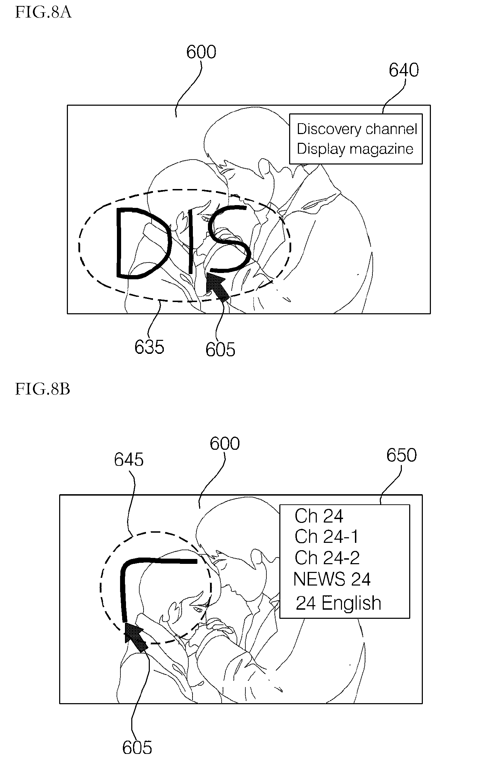

As shown in FIG. 8A, a second trajectory 635 of a pointing signal received based on an English character recognition rule may be recognized as 'DIS'. Therefore, program titles including 'DIS' may be displayed in a broadcasting list 640.

In the absence of a character corresponding to a third trajectory 645 of a received pointing signal, a previous searched broadcasting list 650 may be displayed in FIG. 8B.

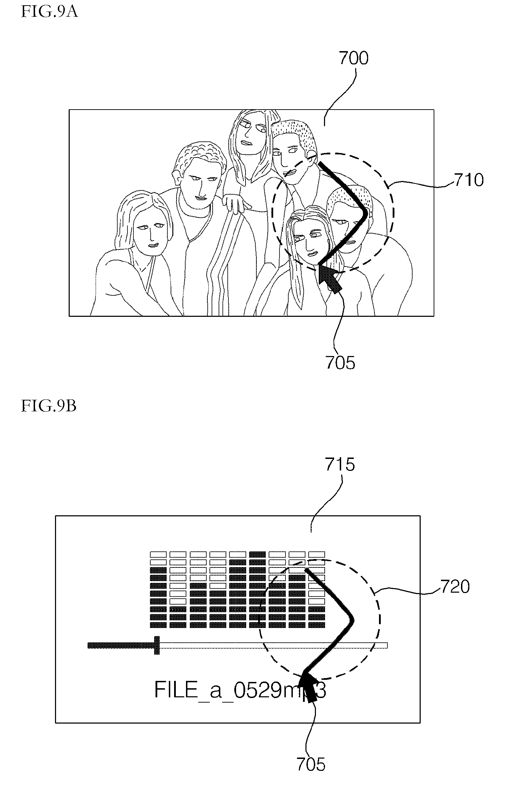

FIGs. 9A to 11B illustrate screens having images displayed on a display according to an exemplary embodiment.

The user or the manufacturer may preliminarily map trajectories of input pointing signals to operations.

While a broadcast image 700 is being displayed by implementing a broadcasting display menu, a pointing signal may be received. As shown in FIG. 9A, when the trajectory of the pointing signal represents '>' 710, channel switching may occur.

While a music play image 715 is being displayed by implementing a music play menu, a pointing signal may be received. As shown in FIG. 9B, when the trajectory of the pointing signal represents '>' 720, the next music may be played.

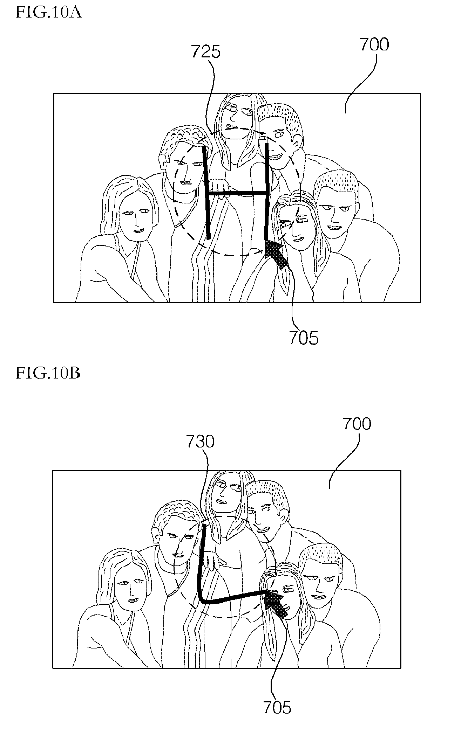

While the broadcast image 700 is being displayed by implementing the music play menu, if the trajectory of a received pointing signal represents 'H' 725, an audio volume may be turned up as shown in FIG. 10A. If the trajectory of the received pointing signal represents 'L' 730, the audio volume may be turned down as shown in FIG. 10B.

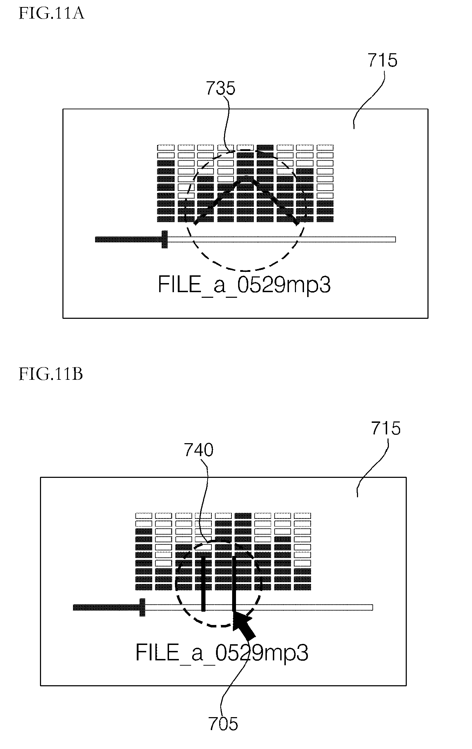

While the music play image 715 is being displayed by implementing the music play menu, if the trajectory of a received pointing signal represents '^' 735, then the played music may be re-winded as shown in FIG. 11A. If the trajectory of the received pointing signal represents '11' 740, then the played music may be paused as shown in FIG. 11B.

In an example embodiment, a user holding the remote controller 201 or pointing device (such as a mobile communication terminal) may move the remote controller 201 closer to the image display device 100. This may cause the displayed image to enlarge (or to reduce size). Alternatively, the user may move the remote controller 201 farther from the image display device 100. This may cause the displayed image to reduce size (or to enlarge). These zooming in or zooming out operations may occur based on the movement closer/farther from the image display device and/or with other user input (such as using a key or button).

As is apparent from the above description, a fast channel search or operation implementation may be enabled using a 3D remote controller.

Embodiments of the present invention may provide an image display device for fast searching for a user-intended broadcasting list upon receipt of a signal from a 3D remote controller (or pointing device), and providing the broadcasting list (or channel list), or immediately performing a predetermined operation.

An operation method of an image display device using a 3D remote controller may be provided that includes receiving a directional pointing signal from the 3D remote controller, and displaying a broadcasting list associated with a character in the presence of the character corresponding to a trajectory of the received pointing signal according to a pre-stored character recognition rule.

An operation method of an image display device using a 3D remote controller may also be provided that includes receiving a directional pointing signal from the 3D remote controller, and performing an operation preset for a trajectory of the received pointing signal.

An image display device using a 3D remote controller may be provided that includes a display, a storage (or memory) for storing a character recognition rule, an interface for receiving a directional pointing signal from the 3D remote controller, and a controller for, in presence of a character corresponding to a trajectory of the pointing signal received through the interface, displaying a broadcasting list associated with the character on the display.

An image display device using a 3D remote controller may be provided that includes a display, an interface for receiving a directional pointing signal from the 3D remote controller, and a controller for presetting operations for trajectories, performing an operation preset for a trajectory of the pointing signal received through the interface, and displaying an image associated with the performed operation.

Exemplary embodiments of the present invention may be embodied as processor-readable codes on a processor-readable recording medium provided in an image display device. The processor-readable recording medium is any data storage device that can store data that can thereafter be read by a process. Examples of the processor-readable recording medium include, but are not limited to, optical data storages such as ROM, RAM, CD-ROMs, magnetic tapes, floppy disks, optical data storage devices, and carrier waves (such as data transmission through the Internet via wired or wireless transmission paths). The processor-readable recording medium may also be distributed over network-coupled computer systems so that the processor-readable code is stored and executed in a distributed fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of controlling an image display device using a pointing device, comprising:
receiving signals corresponding to spatial coordinates of the pointing device;
recognizing at least one of a movement direction or a symbol based on the received signals; and
performing a prescribed operation of the image display device based on the at least one of the recognized movement direction or the recognized symbol.

2. The method according to claim 1, wherein the recognized symbol is a character, and the perform of the prescribed operation is a display of a channel list including at least one of a channel number or characters based on the at least one recognized character.

3. The method to claim 2, wherein displayed characters include a program title that include the recognized at least one character or a broadcasting station name that include the recognized at least one character.

4. The method according to claim 2, further comprising displaying a broadcast image when the broadcasting has the channel number or the characters that match the recognized at least one character.

5. The method according to claim 2, further comprising displaying a trajectory of the received signals.

6. The method according to claim 5, further comprising displaying a previous channel list, in an absence of a character corresponding to the trajectory according to a character recognition rule.

7. The method according to claim 6, wherein the character recognition rule is one of a Korean language recognition rule, an English language recognition rule, a Japanese language recognition rule and a digit recognition rule.

8. The method according to claim 2, further comprising displaying a broadcast image of a selected broadcasting when a broadcasting is selected from the channel list.

9. The method according to claim 1, wherein depending upon an application being executed by the image display device, the prescribed operation is different.

10. The method according to claim 1, wherein the prescribed operation is one of a broadcasting information display, a channel list display, a game implementation, a mute implementation, switching of an on-going menu, picture switching in a slide show or moving picture play/stop.

11. The method according to claim 1, further comprising displaying a trajectory of the received signals.

12. The method according to claim 11, wherein the prescribed operation is to execute a menu or a file having a name that matches the character.

13. The method according to claim 8, wherein the prescribed operation is enlarging a displayed image or reducing a size of a displayed image.

14. An image display device comprising:
a display;
an interface to receive signals corresponding to spatial coordinates of a pointing device; and
a controller to recognize at least one of a movement direction or a symbol based on the received signals, the controller to perform a prescribed operation of the image display device based on the at least one of the recognized movement direction or the recognized symbol.

15. The image display device according to claim 14, wherein said units are further configured to carry out a method as claimed in any one of claims 2 to 13.
